# EUROPEAN PATENT APPLICATION

(11) **EP 4 224 674 A1**
(43) Date of publication of application: **09.08.2023**
(21) Application number: 21875560.1
(22) Date of filing: 28.09.2021
(51) Int. Cl.: H02J 13/00, G06Q 50/06, H02J 3/14

(54) **POWER CONTROL SYSTEM AND PROGRAM**

(30) Priority: 30.09.2020 JP 2020165448
(71) Applicant: Daikin Industries, Ltd., Osaka-shi, Osaka 530-0001 (JP)
(72) Inventor: NAKAGAWA, Yoshihiro, Osaka-shi, Osaka 5300001 (JP); FURUI, Shuji, Osaka-shi, Osaka 5300001 (JP); NAKAO, Takuya, Osaka-shi, Osaka 5300001 (JP); MATSUI, Nobuki, Osaka-shi, Osaka 5300001 (JP)
(74) Representative: Hoffmann Eitle
(86) International application number: PCT/JP2021/035486
(87) International publication number: WO 2022/071259

(57) **Abstract**

[Object] To control (limit) power usage of a group including a plurality of consumers such that power usage control is appropriately performed on a consumer-by-consumer basis to implement control for keeping the power usage of the entire group within a predetermined range while maintaining convenience of power usage for each consumer.

[Solution] A system for performing power control such that a target value set for a group including a plurality of consumers is not exceeded includes a first prediction unit 320 that acquires a predicted value of power usage for each of the plurality of consumers, and a limit value setting unit 330 that sets a limit value correlated with available power set for each consumer for a specific time period. The limit value setting unit 330 sets the limit value such that when a predicted value of each of the plurality of consumers for the specific time period is relatively small, a value obtained by dividing the limit value by the predicted value is larger than when the predicted value is relatively large.

## Description

### Technical Field

The present disclosure relates to a power control system and a program.

### Background Art

PTL 1 describes a power control system including a plurality of grouped consumers including a power meter that measures power consumption consumed by a load, and a control device that accepts power consumption measured by the power meter from each of the consumers, outputs group power consumption on a group-by-group basis by using the power consumption of each of the consumers, and performs control such that, when group power consumption of any group exceeds a group contract power set in advance for each group, the group power consumption of a power-exceeding group becomes equal to or less than the group contract power.

### Citation List

### Patent Literature

PTL 1: Japanese Unexamined Patent Application Publication No. 2019-30087

### Summary of Invention

### Technical Problem

When contract power is set for a group including a plurality of consumers, power is supplied to the group, which is a contract target. Since the ratio of the power usage of each consumer to the power usage of the entire group varies depending on the time of day, it is desirable to appropriately control the power usage on a consumer-by-consumer basis.

It is an object of the present disclosure to control (limit) power usage of a group including a plurality of consumers such that power usage control is appropriately performed on a consumer-by-consumer basis to implement control for keeping the power usage of the entire group within a predetermined range while maintaining convenience of power usage for each consumer.

### Solution to Problem

A power control system of the present disclosure is a power control system for performing power control such that a target value set for a group including a plurality of consumers is not exceeded, the system including an acquisition unit that acquires a predicted value of power usage for each of the plurality of consumers; and a setting unit that sets a limit value correlated with available power set for each of the consumers for a specific time period, wherein the setting unit sets the limit value such that when a predicted value of each of the plurality of consumers for the specific time period is relatively small, a value obtained by dividing the limit value by the predicted value is larger than when the predicted value is relatively large.

This configuration provides appropriate allocation of power available to each individual consumer included in the group for use while performing control such that the power usage of the entire group does not exceed the contract power.

The setting unit may set the limit value to be equal to or greater than a predetermined lower limit, such that when the predicted value of each of the plurality of consumers for the specific time period is relatively small, a value obtained by dividing the limit value by the predicted value becomes large.

This configuration can secure a certain amount of power or more based on the lower limit as the power usage to be allocated to each consumer.

Further, when the predicted value of each of the plurality of consumers for the specific time period is relatively small, the setting unit may correct the limit value to a value larger than the predicted value, thereby increasing a value obtained by dividing the limit value by the predicted value.

With this configuration, allocation of an excessively small amount of power usage to each consumer can be avoided by correction.

Further, the setting unit may set the limit value for each of the plurality of consumers such that a value obtained by adding up the limit value for each of the plurality of consumers for the specific time period is equal to or less than the target value of the group of the plurality of consumers.

This configuration can prevent the power usage of the entire group from exceeding the target value even when control is performed such that the amount of power usage to be allocated to each consumer is not excessively small.

Further, the setting unit may set the limit value for each of the consumers, based on information on a predicted value of power usage of each of the consumers for the specific time period.

This configuration makes it possible to set the limit value based on the predicted value of the power usage of each of the consumers included in the group.

Further, the setting unit may set the limit value for each of the consumers, based on information on actual power usage of each of the consumers over a past specific period.

This configuration makes it possible to set the limit value based on an actual result of the power usage of each of the consumers included in the group in the past.

Further, the setting unit may set the limit value for each of the consumers, based on information on a maximum value of power usage of each of the consumers over each time period in a specific period.

This configuration makes it possible to set the limit value based on the contract power set for the group.

Further, when a predicted value of power usage of at least a consumer among the consumers for the specific time period is lower than a predetermined lower-limit threshold, the setting unit may set the lower limit as the limit value of the consumer.

This configuration ensures that a consumer to which less power is set to be allocated for a certain time period when a limit value is set by a specific method can use power over the time period.

Further, when a total value of the predicted value of the power usage of the plurality of consumers for the specific time period is smaller than the target value of the group including the plurality of consumers by a certain amount or more, the setting unit may set, for one or more consumers included in the group, the limit value of the power usage of the consumers for the specific time period to a value higher than the predicted value of the power usage of each of the consumers in a range in which power usage of the group does not exceed the target value.

This configuration allows the consumers to use power more than even when the limit value is set, the consumer can use power more than predicted power usage, according to the conditions, even when limit values are set.

A program of the present disclosure is a program for causing a computer that controls a system for performing power control such that a target value set for a group including a plurality of consumers is not exceeded, to function as an acquisition unit that acquires a predicted value of power usage for each of the plurality of consumers; and a setting unit that sets a limit value correlated with available power set for each of the consumers for a specific time period, wherein in a function of the setting unit, the computer is caused to set the limit value such that when a predicted value of each of the plurality of consumers for the specific time period is relatively small, a value obtained by dividing the limit value by the predicted value is larger than when the predicted value is relatively large.

A computer having installed therein the program provides appropriate allocation of power available to each individual consumer included in the group for use while performing control such that the power usage of the entire group does not exceed the contract power.

### Brief Description of Drawings

[Fig. 1] Fig. 1 is a diagram illustrating an overall configuration of a control system for equipment devices to which the present embodiment is applied.
[Fig. 2] Fig. 2 is a diagram illustrating a configuration of a server.
[Fig. 3] Fig. 3 is a diagram illustrating a configuration of a control device.
[Fig. 4] Fig. 4 is a diagram illustrating an example hardware configuration of the control device and the server.
[Fig. 5] Fig. 5 is a diagram illustrating a configuration of an equipment device.
[Fig. 6] Fig. 6 includes diagrams illustrating an example of predicted power usage of one consumer, in which Fig. 6(A) is a diagram illustrating an example of actual results of power usage in the past, Fig. 6(B) is a diagram illustrating prediction results of power usage over a day, and Fig. 6(C) is a diagram illustrating an example of predicted values for respective time periods in the prediction results.
[Fig. 7] Fig. 7 includes diagrams illustrating an example of adding up predicted power usage of a group including a plurality of consumers, in which Fig. 7(A) is a diagram illustrating example predictions for the respective consumers included in the group, Fig. 7(B) is a diagram illustrating prediction results of the entire group, and Fig. 7(C) is a diagram illustrating an example of predicted values for respective time periods in the prediction results of the group.
[Fig. 8] Fig. 8 includes diagrams illustrating an example of limit values set for respective consumers included in a group, in which Fig. 8(A) is a diagram illustrating an example of prediction of average power used by the group per time period, Fig. 8(B) is a diagram illustrating a result of allocation of limit values to the consumers included in the group, and Fig. 8(C) is a diagram illustrating an example of limit values allocated to one of the consumers included in the group for the respective time periods.

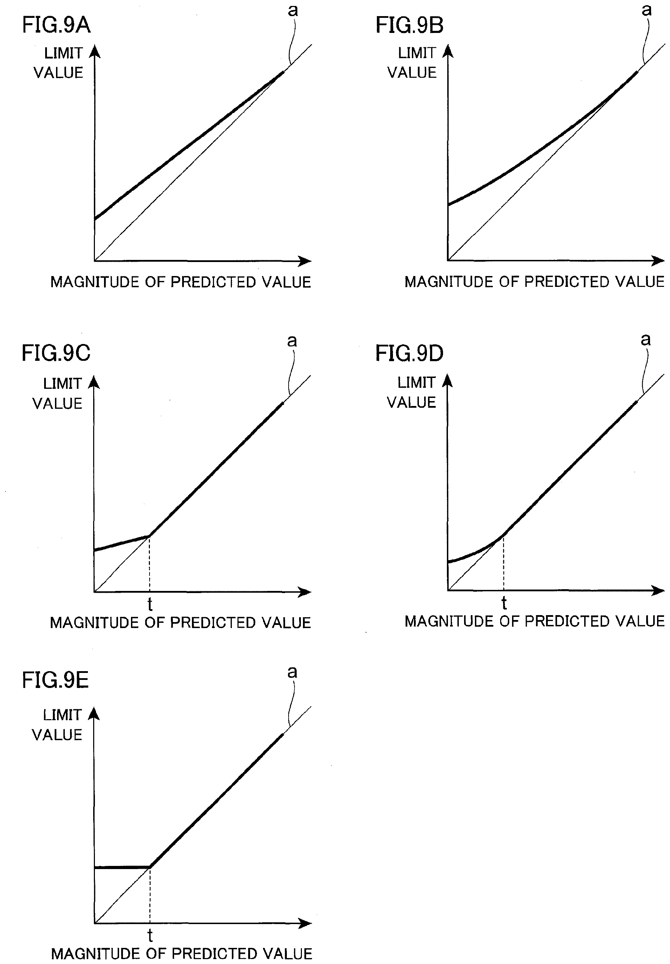

[Fig. 9] Fig. 9 includes diagrams illustrating examples of a method for setting a limit value with respect to a predicted value, in which Fig. 9(A) is a diagram illustrating a method for setting a limit value according to a first mode, Fig. 9(B) is a diagram illustrating a method for setting a limit value according to a second mode, Fig. 9(C) is a diagram illustrating a method for setting a limit value according to a third mode, Fig. 9(D) is a diagram illustrating a method for setting a limit value according to a fourth mode, and Fig. 9(E) is a diagram illustrating a method for setting a limit value according to a fifth mode.
[Fig. 10] Fig. 10 is a diagram illustrating an example of a predicted value that is relatively smaller than an actual past value.
[Fig. 11] Fig. 11 is a diagram illustrating an example of a predicted value that is relatively smaller than predicted values of the other consumers in the group. Description of Embodiments
An embodiment will be described in detail hereinafter with reference to the accompanying drawings.

### <System Configuration>

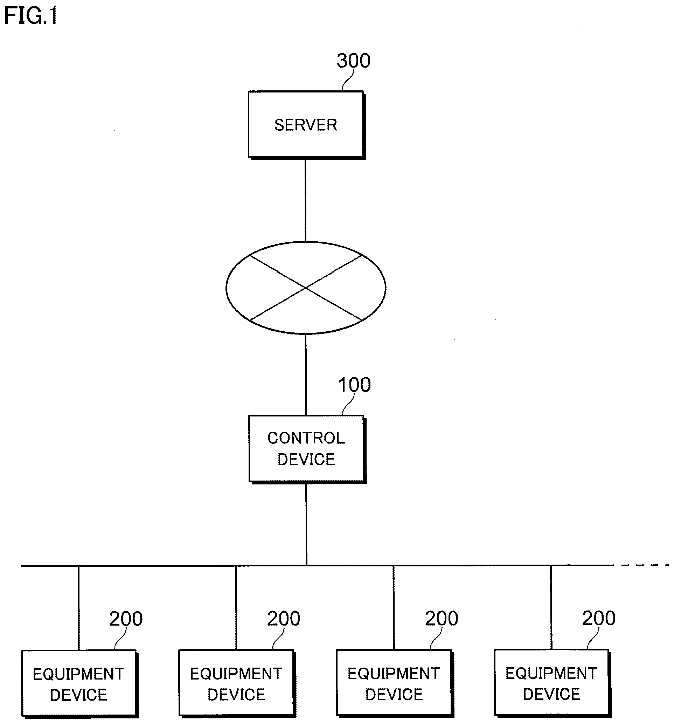

Fig. 1 is a diagram illustrating an overall configuration of a control system for equipment devices to which the present embodiment is applied. The control system according to the present embodiment includes a control device 100, an equipment device 200 that is a device to be controlled, and a server 300. The control device 100 and the equipment device 200 are connected to each other via a network. The network may be a LAN (Local Area Network) using a dedicated line, a WAN (Wide Area Network), a VPN (Virtual Private Network) set on the Internet, or the like.

The equipment device 200 is a piece of equipment or a device that operates using power. The control device 100 controls the operation of one or more equipment devices 200. Fig. 1 illustrates an example configuration in which the control device 100 controls a plurality of equipment devices 200. The equipment devices 200 may be of any type as long as the equipment devices 200 are pieces of equipment or devices that operate using power and whose operation is controlled by the control device 100. The following description may describe an example in which the control system of the present embodiment is applied to control of an air conditioner as a specific example of the equipment devices 200.

Each of the equipment devices 200 includes a control unit that controls the equipment device 200 in accordance with an instruction from the control device 100. The control device 100 generates an instruction (hereinafter referred to as a "control instruction") for controlling the equipment devices 200 to be controlled, and transmits the generated control instruction to each of the equipment devices 200. In each equipment device 200, the control instruction is acquired from the control device 100, and the control unit of the equipment device 200 performs setting of the equipment device 200 in accordance with the acquired control instruction and controls the operation.

The control device 100 and the server 300 are connected to each other via a network. In the example configuration illustrated in Fig. 1, one control device 100 connected to the server 300 is illustrated. In actuality, a plurality of control devices 100 are connected to the server 300. Each control device 100 is connected to one or more equipment devices 200. The control device 100 and the server 300 are connected to each other via a network, examples of which include the Internet. A LAN or a WAN may be used instead.

### <Relationship between Electricity Charges and Control of Equipment Devices 200>

Electricity charges will now be described. Electricity charges mainly include a base charge and a volume charge, and are specified on a monthly basis. Calculation of the base charge is based on the base charge unit price and the contract power. The contract power is set as the largest value of the maximum power demand over the past one year from the current month. The maximum power demand is the maximum value of monthly average power used per time period (demand time period: 30 minutes). The average power used is an average value of power demand (power usage) over each time period. Calculation of the volume charge is based on the volume charge unit price and the amount of power used per month.

As described above, the contract power is the largest value of the maximum power demand over the past one year. Accordingly, when the maximum power demand over a certain month (in other words, the average power used over a certain time period in the month) is the contract power, the base charge based on the contract power is charged over one year even if the maximum power demand is kept lower than the contract power after the month. When the average power used over a certain time period exceeds the value of the contract power so far and becomes equal to the maximum power demand for the month including the time period, the average power used (maximum power demand) over the time period is used as new contract power for the calculation of the base charge thereafter.

The volume charge unit price is set in various ways. The volume charge unit price may be set to vary under a predetermined condition. For example, the volume charge unit price may be set to vary by time of day, by weekday or weekend, by season, or the like. Due to the trading of electric power in the market, the volume charge unit price may be set to vary to reflect the trading price of electric power in the market.

The equipment devices 200 may be controlled for a reduction in electricity charges required for the operation of the equipment devices 200. In this case, it is demanded to control the equipment devices 200 so that the average power used does not exceed the current contract power. In a case where the volume charge unit price varies, it is more efficient to reduce the amount of power used in a high-unit-price time period than to reduce the amount of power used in a low-unit-price time period, in terms of reduction in electricity charges. However, the volume charge unit price affects only the volume charge per time period, whereas the contract power affects the electricity charges for one year after the current month. Accordingly, control that takes into account average power used is given priority over control that takes into account fluctuations in volume charge unit price.

Electricity charges are charged to the subscribers supplied with electricity. In the present embodiment, the subscribers supplied with electricity are assumed to be a group including a plurality of consumers. Accordingly, the average power used is obtained as a total value of average power used by the plurality of consumers included in the group over each time period. The base charge is determined based on the maximum power demand (maximum value of monthly average power used per time period) per group.

The maximum power demand per group is usually less than the total sum of the maximum power demands of the consumers included in the group. This is because the time period in which the maximum power demand is obtained is generally different among the consumers included in the group. Thus, the base charge set for the group is lower than the total sum of the base charges set for the consumers included in the group in accordance with the respective maximum power demands.

Each group is assigned one or more control devices 100. The one or more control devices 100 perform control on the equipment devices 200 of the consumers included in the group in consideration of the average power used per predetermined unit time and the volume charge unit price in accordance with the electricity charges (the base charge and the volume charge) set per group.

Each consumer possesses one or more equipment devices 200, and the control device 100 controls the equipment devices 200 of one or more consumers. However, one consumer does not always correspond to one control device 100. A plurality of equipment devices 200 possessed by one consumer may be controlled by a plurality of control devices 100, or equipment devices 200 possessed by a plurality of consumers may be controlled by one control device 100. One control device 100 may be assigned to a plurality of groups. For simplicity, the following description will be given, assuming a configuration in which one control device 100 is assigned to and an equipment device 200 of each consumer is controlled by the control device 100 corresponding to the consumer.

### <Configuration of Server 300>

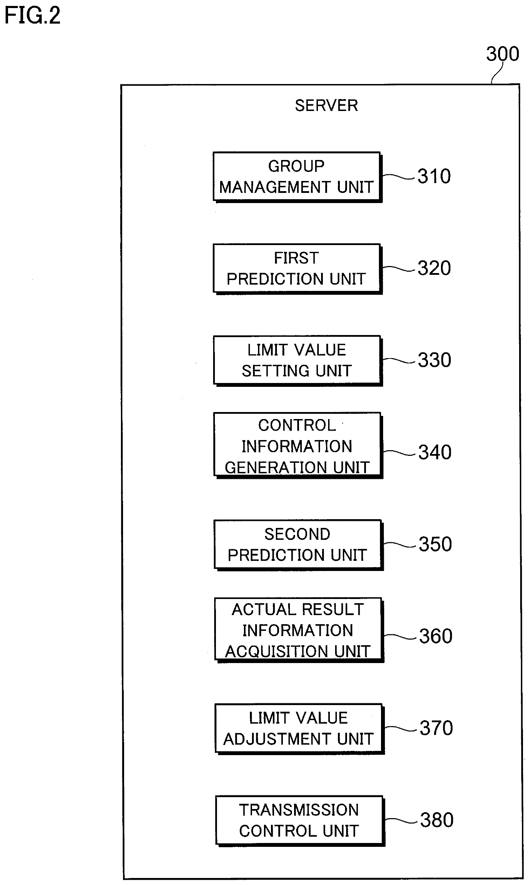

Fig. 2 is a diagram illustrating a configuration of the server 300. The server 300 is implemented as, for example, a server (so-called cloud server) constructed on a cloud environment of a network. The server 300 includes a group management unit 310, a first prediction unit 320, a limit value setting unit 330, a control information generation unit 340, a second prediction unit 350, an actual result information acquisition unit 360, a limit value adjustment unit 370, and a transmission control unit 380.

The group management unit 310 manages the group of consumers described above. As described above, the group is set as a unit of power contract. The group management unit 310 acquires and holds information on the contract power, the maximum power demand, and the average power used per time period of the group. The group management unit 310 further manages the consumers included in the group. The group management unit 310 acquires and holds information on the contract power, the maximum power demand, and the average power used per time period of each of the consumers included in the group. The information on the average power used by each consumer is obtained from, for example, the control device 100 that controls the equipment devices 200 of the consumer. The information on the average power used by the group is obtained from, for example, the control device 100 that controls the equipment devices 200 of the consumers included in the group (hereinafter referred to as "equipment devices 200 of the group"). Specifically, for example, total average power used by the consumers included in the group over each time period is set as the average power used by the group.

The first prediction unit 320 predicts, for each of the consumers included in the group, the average power used by the equipment devices 200 of the consumer over each time period. The first prediction unit 320 is an example of a prediction unit. The first prediction unit 320 is further an example of an acquisition unit that obtains a prediction result of the average power used by each consumer. The average power used over each time period is predicted by the first prediction unit 320, based on, for example, history information regarding the operation of an equipment device 200 of each consumer in the group in the past. The history information regarding the operation includes a wide variety of information related to the operation of the equipment devices 200, such as information on the operating environment of the equipment devices 200, as well as information on the operating state of the equipment devices 200. The information on the operating state of the equipment devices 200 includes, for example, information such as the operating rate, the continuous operating time, and the number of times of operation. The information on the operating environment includes, for example, weather conditions such as weather, temperature, and humidity, and information such as a month, a day, and a time of day. While the server 300 including the first prediction unit 320 is configured to predict the average power used by an equipment device 200 of each of the consumers included in the group over each time period, the server 300 may be configured to acquire a prediction result obtained by an external server. In this case, the server 300 may include, instead of the first prediction unit 320, an acquisition unit that acquires a prediction result from an external server via a network.

The average power used over a specific time period of a specific date and time (hereinafter referred to as "specific time period") may be predicted based on the average power used by the equipment device 200 over a reference time period relative to the specific time period. The reference time period is set based on, for example, history information regarding operation. The reference time period may be, for example, a past time period in which weather conditions are similar to weather conditions expected at the date and time to which the specific time period corresponds, or a corresponding time period of the same day of the same month a year ago. Alternatively, the average power used by the equipment device 200 over the specific time period may be predicted in consideration of the average power used by the equipment device 200 over time periods before and after the reference time period, the transition of the average power used by the equipment device 200 over time periods of several days until the day including the reference time period, or the like.

The limit value setting unit 330 sets, for each of the consumers included in the group, a limit value for the average power used by the equipment devices 200 of the consumer over each time period, based on the result predicted by the first prediction unit 320. The limit value setting unit 330 is an example of a setting unit. If the average power used by the group exceeds the contract power of the group, the average power used is set as new contract power, resulting in an increase in the base charge of the electricity charges. Accordingly, it is demanded to set, for the group, target power based on the contract power and to perform control such that the average power used by the entire equipment devices 200 of the group over each time period does not exceed the target power. Further, the limit value for each time period is set for each consumer such that the total value of the limit values of the consumers is equal to or less than a threshold based on the target power. In other words, the limit value is set in correlation with available power set for each consumer for each time period. The target power is set to a value equal to or less than the contract power, for example, to a value lower than the contract power by a certain value. The threshold is set to a value equal to or less than the target power, for example, a value lower than the target power by a certain value.

In the foregoing description, a target value (target power) is set for the average power (kW) used by the group over each time period, and the target value is used to set a limit value for each of the consumers included in the group. Alternatively, a target value (target amount of power) may be set for the amount of power (kWh) used by the group over each time period, and the target value may be used to set a limit value for each of the consumers included in the group. A difference is that the power usage (kW) or the amount of power used (kWh) is used as a reference for setting the target value and the limit value. The following describes, as an example, the setting of the target value (target power) and the limit value based on the average power used, as described above.

The limit value of each of the consumers included in the group is set based on, for example, prediction of the average power used by the consumer, which is performed by the first prediction unit 320. From the prediction by the first prediction unit 320, the predicted proportion of the average power used by each consumer in the group is identified for each time period. For example, in a case where the total value of the limit values of the consumers is set to be equal to the threshold based on the target power described above, the average power used corresponding to the threshold is divided according to the proportions of the average power used by the respective consumers, which are predicted by the first prediction unit 320, to determine the limit values of the respective consumers. In other words, the limit value means the power usage available to each consumer for the time period.

Alternatively, the limit value may be set based on the actual value of the average power used per consumer per time period in a past specific period, instead of based on the proportion of the average power used per consumer predicted for each time period. For example, the proportion of the actual value of the average power used by each consumer over the reference time period described in the description of the prediction by the first prediction unit 320 to the specific time period described in the same description is identified. The proportion of the actual value may be used to set the limit value of each consumer for the specific time period. The specific period is determined in accordance with the amount of information obtained as the actual value of the reference time period. The specific period may be set as, for example, the past one year or several years, or a period from a specific month and day to a specific month and day.

Alternatively, the limit value may be set based on the maximum value of the average power used per consumer per time period in the specific period. For example, it is assumed that the specific period is set as the past one year. The maximum value of the average power used per time period in the past one year can be obtained for each consumer. Then, the maximum values of the respective consumers may be compared with each other, and the limit values of the respective consumers may be set in proportions according to the ratio. In this case, unlike the use of the actual value of the reference time period, the time period in which the average power used is the maximum value may be different for each consumer.

The limit value will further be described. As described above, the limit value is set in correlation with available power set for each consumer for each time period. More specifically, the limit value is set such that the total average power used by the consumers in the group does not exceed the target power, and the limit value for each consumer is set based on, for example, predicted average power used by each consumer, which is obtained by the first prediction unit 320. However, if an extremely small limit value is set for a certain consumer, the consumer may be substantially prevented from using power. For example, equipment devices 200 of a certain consumer include, other than an air conditioner, lighting devices and the like having a baseline power of about 20 kW. In this case, the air conditioner cannot be operated at all if the limit value is set to 20 kW. This situation is likely to occur when a predicted value of power usage of the equipment devices 200 of a certain consumer is smaller than predicted values of power usage of other consumers or is smaller than an actual past value of power usage of the equipment devices 200 of the consumer (such situations are hereinafter collectively referred to as "being relatively small" in the predicted value of power usage).

For simplicity, consideration is given to a case where the limit value is set to the same value as the predicted value. In this case, a value obtained by dividing the limit value by the predicted value is 1 (limit value a predicted value = 1). A consumer for which the limit value for a certain time period is set in this way can only use the power corresponding to the predicted value at the maximum. Accordingly, the relatively smaller the predicted value is, the more likely it is to impair the operation of the equipment devices 200 of the consumer, as described above. Specifically, if the predicted value of a certain consumer is smaller than the predicted values of the other consumers in the group, the available power allocated to the consumer is small, which may prevent sufficient operation of the equipment devices 200 of the consumer due to the limitation based on the limit value. If the predicted value of a certain consumer for a certain time period is smaller than an actual past value of power usage of the consumer, the power required for the consumer is likely to exceed the predicted value, which may prevent sufficient operation of the equipment devices 200 of the consumer due to the limitation based on the limit value.

Accordingly, it is conceivable to set the limit value such that, when the predicted value of the average power used by a certain consumer for a certain time period is relatively small, a value obtained by dividing the limit value by the predicted value is larger than that when the predicted value is relatively large. Various modes are conceivable for a specific method for setting the limit value. Some modes will be described hereinafter.

Fig. 9 includes diagrams illustrating examples of a method for setting a limit value with respect to a predicted value. Fig. 9(A) is a diagram illustrating a method for setting a limit value according to a first mode, Fig. 9(B) is a diagram illustrating a method for setting a limit value according to a second mode, Fig. 9(C) is a diagram illustrating a method for setting a limit value according to a third mode, Fig. 9(D) is a diagram illustrating a method for setting a limit value according to a fourth mode, and Fig. 9(E) is a diagram illustrating a method for setting a limit value according to a fifth mode. In each of the graphs illustrated in Figs. 9(A) to 9(E), the horizontal axis represents the relative magnitude of the predicted value (described as "magnitude of predicted value" in the drawing), and the vertical axis represents the limit value. A line a indicates that the predicted value and the limit value are the same value (limit value a predicted value = 1). The limit value in a region above the line a is a value larger than the predicted value (limit value a predicted value > 1).

In the mode illustrated in Fig. 9(A), as the relative magnitude of the predicted value decreases, the value obtained by dividing the limit value by the predicted value increases at a constant rate (linearly). In the example illustrated in Fig. 9(A), the predicted value and the limit value are the same value (limit value ÷ predicted value = 1) when the predicted value is the maximum value that can be taken. However, the limit value is not limited to that in the illustrated example as long as the limit value is equal to or greater than the predicted value.

In the mode illustrated in Fig. 9(B), as the relative magnitude of the predicted value decreases, the value obtained by dividing the limit value by the predicted value increases, and the rate of increase in the value obtained by dividing the limit value by the predicted value increases. As in the example in Fig. 9(A), the limit value is not limited to that in the illustrated example as long as the limit value is equal to or greater than the predicted value when the predicted value is the maximum value that can be taken.

In the example illustrated in Fig. 9(C), when the relative magnitude of the predicted value is greater than a reference t, the limit value is set to the same value as the predicted value. When the relative magnitude of the predicted value is smaller than the reference t, the value obtained by dividing the limit value by the predicted value increases at a constant rate (linearly) as the relative magnitude of the predicted value decreases. As described above, the smaller the relative magnitude of the predicted value of the power usage of a certain consumer is, the more likely it is to impair the operation of the equipment devices 200 of the consumer. Accordingly, the reference t is provided for the relative magnitude of the predicted value, and the limit value is operated in a range smaller than the reference t. The method for setting the reference t is not particularly limited. For example, the reference t may be appropriately set according to the configuration of the consumers in the group, the configuration of the equipment devices 200 of each consumer, or the like.

In the example illustrated in Fig. 9(D), when the relative magnitude of the predicted value is greater than the reference t, the limit value is set to the same value as the predicted value. When the relative magnitude of the predicted value is smaller than the reference t, as the relative magnitude of the predicted value decreases, the value obtained by dividing the limit value by the predicted value increases, and the rate of increase in the value obtained by dividing the limit value by the predicted value increases. The method for setting the reference t is not particularly limited, as in the example illustrated in Fig. 9 (C) .

In the example illustrated in Fig. 9(E), when the relative magnitude of the predicted value is greater than the reference t, the limit value is set to the same value as the predicted value. When the relative magnitude of the predicted value is smaller than the reference t, the limit value is constant (fixed value). In other words, the limit value has a lower limit. In the illustrated example, a fixed limit value obtained when the relative magnitude of the predicted value is smaller than the reference t is set as the limit value obtained when the magnitude of the predicted value is equal to the reference t. However, the limit value is not necessarily limited to this value and may be set to a value larger or smaller than the limit value obtained when the magnitude of the predicted value is equal to the reference t. The method for setting the lower limit will be described below.

While the method for setting the limit value has been described with reference to five modes by way of example, the method for setting the limit value is not limited to the examples described above. The limit value may be set by using a combination of some of the examples described above. Regardless of which method to use, the limit value is set on the premise that a limit value for each time period is set for each consumer such that the total value of the limit values of the consumers does not exceed the threshold based on the target power. Thus, depending on the configuration of the consumers included in the group or the configuration of the equipment devices 200, the limit value for the average power used by a certain consumer over a certain time period may be difficult to set to the same as the predicted value of the average power used by the consumer over the time period (the limit value may be lower than the predicted value). Even in this case, it is desirable to set the limit value such that the value obtained by dividing the limit value by the predicted value increases as the relative magnitude of the predicted value decreases, and to avoid a situation in which the equipment devices 200 of each consumer cannot be normally operated.

The setting of the lower limit in the method for setting the limit value will further be described. A value larger than 0 is selected as the lower limit. Accordingly, in the prediction by the first prediction unit 320, even when the average power used by a certain consumer over a certain time period is predicted to be 0, the limit value corresponding to the lower limit is set.

The method for setting the lower limit may be appropriately determined in accordance with, for example, the operation or specification of the control system, or agreement within the group, between the consumers, or the like. For example, a fixed value may be determined in advance. Alternatively, a value that varies based on a predicted value or the like of the average power used by the entire group over each time period may be used. When a fixed value is to be set as the lower limit, the same value may be set for the consumers, or a different value may be set for each consumer according to an appropriate condition or a request from the consumer. The predicted value of the average power used by the entire group per time period is obtained by adding up the predicted values of the average power used by the consumers included in the group per time period, which are obtained by the first prediction unit 320.

When a lower limit is to be set as a limit value, a lower-limit threshold may be set for the limit value, and the lower limit may be applied as the limit value when the limit value assigned to a certain consumer falls below the lower-limit threshold. A value different from the lower limit may be set as the lower-limit threshold. For example, a value lower than the lower limit is set as the lower-limit threshold. When the limit value assigned to a certain consumer falls below the lower-limit threshold in a certain time period, the lower limit, which is higher than the lower-limit threshold, is set as the limit value of the consumer for the time period.

When the lower limit described above is set as a limit value, a limit value different from (larger than) the value based on the proportion specified by the limit value setting method described above is assigned to some of the consumers included in the group. Accordingly, if the value given as the lower limit is simply added to the value calculated by the proportion according to the setting method described above to set the limit value of each consumer, the total value of the limit values of the respective consumers may exceed the threshold based on the target power described above. It is therefore desirable to perform correction such that, if there is a consumer for which the lower limit is applied to the limit value, the total value of the limit values of the respective consumers that take into account the lower limit does not exceed the threshold. It is conceivable to set the limit value of each consumer such that, for example, a value obtained by adding together the value calculated by the proportion according to the setting method described above and the applied lower limit is equal to or less than the threshold described above. It is also conceivable to subtract the total of the applied lower limits from the limit value of the consumer to which the lower limit is not applied.

A description has been made that a limit value is set for the average power used by an equipment device 200 of each consumer over each time period. Alternatively, a configuration may be used in which a limit value is set only for the average power used over a time period satisfying a specific condition. For example, the predicted values of the average power used by the consumers included in the group over a certain time period, which are obtained by the first prediction unit 320, are added up to obtain the predicted value of the average power used by the entire group for the time period. A limit value may be set only for the average power used over such a time period on condition that the predicted value of the average power used by the group exceeds the threshold.

In contrast, consideration will be given to a case where the predicted value of the average power used by the group falls below the threshold described above. The threshold is set based on the target power, and the target power is set based on the contract power. For this reason, if many consumers in the group do not use large power during a certain time period (e.g., a time period from midnight to dawn), the predicted value of the average power used by the group during the time period is considered to fall significantly below the threshold. Accordingly, for example, when the total value of the predicted values of the power usage of the plurality of consumers for a specific time period is smaller than the target value of the group including the plurality of consumers by a certain amount or more, the limit value of each of the consumers in the group may be set to a value higher than the predicted value of the average power used by each consumer within a range in which the total value of the limit values of the consumers does not exceed the threshold.

The control information generation unit 340 generates control information for controlling an equipment device 200 of each of the consumers included in the group. The control information is information for causing the control device 100 to control the equipment devices 200 so that the average power used by the equipment devices 200 of the consumer over each time period does not exceed the limit value of the consumer for the time period, which is set by the limit value setting unit 330. Accordingly, the control information includes information on the limit value set by the limit value setting unit 330 for each consumer. Before the start of each time period in which control is performed using control information, the control information generation unit 340 generates control information for the time period.

When the limit value of each consumer, which is set by the limit value setting unit 330, is adjusted by the limit value adjustment unit 370, the control information generation unit 340 generates control information for reflecting the adjustment result of the limit value in the control of the equipment devices 200. The control information based on the limit value set by the limit value setting unit 330 and the control information based on the limit value adjusted by the limit value adjustment unit 370 are hereinafter referred to as "general control information" and "individual control information", respectively, if they are distinguished from each other. As will be described in detail below, the limit value adjustment unit 370 adjusts the limit value within a time period during which control for reflecting the adjustment of the limit value is performed. Accordingly, unlike the general control information, the individual control information is generated within a time period during which control is performed using the individual control information, after the time period starts.

In a time period during which the equipment devices 200 are currently being controlled (hereinafter referred to as a "current time period"), the second prediction unit 350 predicts the average power used by the equipment devices 200 over the current time period. The average power used is predicted by the second prediction unit 350, based on, for example, information related to the operating status of an equipment device 200 of each consumer within the current time period. The information related to the operating status includes, for example, information such as the transition of the power usage of the equipment device 200 from the start of the current time period to the time point of prediction within the time period, the amount of power used, the state of operation, and the settings related to the operation. The settings related to the operation are specifically selected in accordance with the type of the equipment device 200. For example, when the equipment device 200 is an air conditioner, information such as a difference between a set temperature and an actual room temperature can be used.

The actual result information acquisition unit 360 acquires actual result information related to the operating status of an equipment device 200 of each of the consumers included in the group. Examples of the acquired actual result information include the above-described actual result information for the current time period (actual result information from the start of the current time period to the time point at which the actual result information is acquired), and actual result information for a time period that has already ended. The actual result information may be acquired from the control device 100 that controls the equipment device 200 or may be acquired from the equipment device 200 itself. The actual result information for the current time period, which is acquired by the actual result information acquisition unit 360, is used by the second prediction unit 350 for the prediction of the average power used by the equipment device 200.

The limit value adjustment unit 370 adjusts the limit values of the consumers included in the group, which are set by the limit value setting unit 330, based on a predetermined condition. As an example, the limit value adjustment unit 370 adjusts the limit value of each consumer based on the prediction by the second prediction unit 350. As another example, the limit value adjustment unit 370 adjusts the limit value of each consumer based on the actual result information related to the operating status of the equipment device 200 during the current time period, which is acquired by the actual result information acquisition unit 360. The limit values are adjusted such that the consumers included in the group interchange the power available to the consumers for use. For example, the limit values of some consumers among the consumers included in the group are decreased, and the limit values of the other consumers are increased by an amount corresponding to the decrease in the limit values of some consumers.

The transmission control unit 380 transmits the control information generated by the control information generation unit 340 to the control device 100 that controls the equipment device 200 of the consumer corresponding to the control information. Before the start of each time period in which control is performed using control information, the transmission control unit 380 transmits general control information for the time period to the control device 100. The transmission control unit 380 may transmit general control information for each time period to the control device 100 such that general control information for decreasing the power usage over the time period from the power usage over the immediately preceding time period is transmitted earlier than general control information for increasing the power usage over the time period from the power usage over the immediately preceding time period.

Further, immediately after individual control information is generated, the transmission control unit 380 transmits the individual control information to the control device 100 that controls the equipment device 200 to be controlled using the generated individual control information. The transmission control unit 380 may transmit individual control information to the control device 100 such that individual control information of the equipment device 200 whose limit value is decreased by adjustment is transmitted earlier than individual control information of the equipment device 200 whose limit value is increased by adjustment.

### <Configuration of Control Device 100>

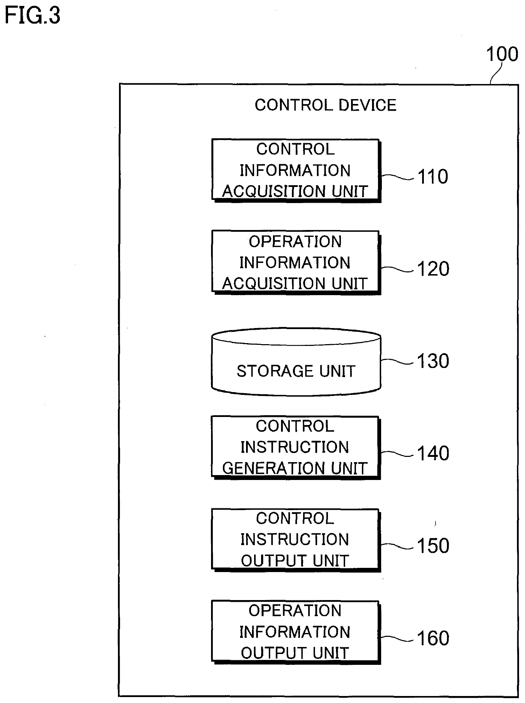

Fig. 3 is a diagram illustrating a configuration of the control device 100. The control device 100 is implemented as an information processing device connected to the server 300 and the equipment device 200 via a network. The control device 100 may be a device (e.g., an edge server) located close to the equipment device 200 to be controlled, or may be a server (cloud server) constructed on a cloud environment. The control device 100 includes a control information acquisition unit 110, an operation information acquisition unit 120, a storage unit 130, a control instruction generation unit 140, a control instruction output unit 150, and an operation information output unit 160.

The control information acquisition unit 110 acquires control information of the equipment device 200 from the server 300. The control information acquired by the control information acquisition unit 110 includes, as control information for a certain time period, general control information acquired before the start of the time period and individual control information acquired during the time period. The general control information includes information on a limit value of average power used that is set for each consumer. The individual control information includes information on a new limit value for adjusting the limit value included in the general control information for the current time period.

The operation information acquisition unit 120 acquires operation information of the equipment device 200 to be controlled by the control device 100. The operation information acquired by the operation information acquisition unit 120 includes a wide variety of information related to the operation of the equipment device 200. The operation information includes, for example, information indicating an operation state such as an operating rate or a continuous operating time of the equipment device 200. The operation information may include various kinds of information considered to affect the operation of the equipment device 200, such as a time of day in which the equipment device 200 is operated, and operation on weekdays or weekends. The operation information acquisition unit 120 may further acquire information on an environment in which the equipment device 200 is installed, such as temperature and humidity. These pieces of information can be acquired by various existing methods in accordance with the type of information. For example, the information may be acquired from the equipment device 200 itself or from various sensor devices or the like. Information on a date and time is obtained by, for example, a clock function or a calendar function of the control device 100.

The storage unit 130 stores various kinds of information acquired by the control information acquisition unit 110 and the operation information acquisition unit 120. The control information acquired by the control information acquisition unit 110 is used to control the equipment device 200. In the control information, the general control information for each time period is stored in the storage unit 130 before the start of the time period in which control is performed using each piece of general control information. The operation information of the equipment device 200, which is acquired by the operation information acquisition unit 120, is transmitted to the server 300 at a predetermined timing and is used for prediction by the first prediction unit 320 and the second prediction unit 350 of the server 300.

The control instruction generation unit 140 generates a control instruction for controlling the equipment device 200, based on the control information acquired by the control information acquisition unit 110. The control instruction generation unit 140 generates a control instruction for operating the equipment device 200 so that the average power used by an equipment device 200 of each consumer over each time period does not exceed the limit value set for the consumer for the time period. When a consumer has a plurality of equipment devices 200, a control instruction is generated for each time period so that the total value of average power used by all of the equipment devices 200 of the consumer does not exceed the limit value for the corresponding time period. In this case, the method by which the consumer allocates power to the plurality of equipment devices 200 thereof so that the limit value set for the consumer is not exceeded is not particularly limited. For example, power may be equally allocated according to the types, device scales, or the like of the equipment devices 200. Alternatively, a specific equipment device 200 may be allocated sufficient power, and the remaining power may be allocated to the other equipment devices 200. Alternatively, in a certain time period, some of the equipment devices 200 are not operated, and only other equipment devices 200 may use power. Alternatively, the control instruction generation unit 140 may generate a control instruction in consideration of the operation information of the equipment devices 200 acquired by the operation information acquisition unit 120. In the control information acquired by the control information acquisition unit 110, the control instruction generated by the control instruction generation unit 140 based on the general control information is held in the storage unit 130.

The control instruction output unit 150 reads the control instruction generated by the control instruction generation unit 140 based on the general control information in the control information acquired by the control information acquisition unit 110 from the storage unit 130 during a time period in which control is performed using the general control information, and transmits the control instruction to the equipment device 200 to be controlled. Further, the control instruction output unit 150 immediately transmits the control instruction generated by the control instruction generation unit 140 based on the individual control information in the control information acquired by the control information acquisition unit 110 to the equipment device 200 to be controlled.

The operation information output unit 160 reads the operation information of the equipment device 200, which is acquired by the operation information acquisition unit 120 and held in the storage unit 130, from the storage unit 130 in accordance with a predetermined condition, and transmits the operation information to the server 300. The operation information may be read and transmitted in response to a request from the server 300 or may be read and transmitted periodically at a predetermined time of a day or the like.

### <Hardware Configuration of Control Device 100 and Server 300>

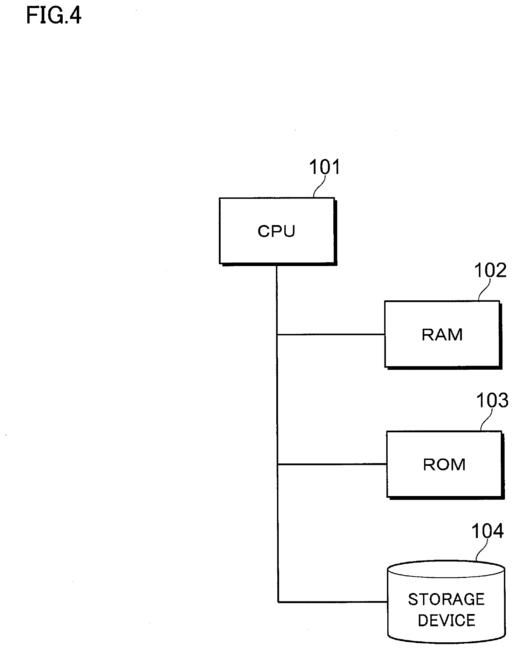

Fig. 4 is a diagram illustrating an example hardware configuration of the control device 100 and the server 300. The control device 100 and the server 300 are implemented by a computer, for example. The control device 100 and the server 300 may be implemented as servers constructed in a cloud environment. Even in this case, the control device 100 and the server 300 are configured as virtual systems using system resources of physical computers, as illustrated in Fig. 4, on a network.

The computer that implements the control device 100 includes an arithmetic unit, namely, a CPU (Central Processing Unit) 101, and storage units, namely, a RAM (Random Access Memory) 102, a ROM (Read Only Memory) 103, and a storage device 104. The RAM 102 is a main storage device (main memory) and is used as a working memory for the CPU 101 to perform arithmetic processing. The ROM 103 holds programs and data such as set values prepared in advance. The CPU 101 can directly read the programs and the data from the ROM 103 to execute processing. The storage device 104 is a unit that stores programs and data. The storage device 104 stores a program. The CPU 101 reads the program stored in the storage device 104 into the main storage device and executes the program. The storage device 104 further stores and saves a result of processing by the CPU 101. Examples of the storage device 104 include a magnetic disk device and an SSD (Solid State Drive).

When the control device 100 is implemented by the computer illustrated in Fig. 4, the functions of the control information acquisition unit 110, the operation information acquisition unit 120, the control instruction generation unit 140, the control instruction output unit 150, and the operation information output unit 160 described with reference to Fig. 3 are implemented by, for example, the CPU 101 executing a program. The storage unit 130 is implemented by the RAM 102 or the storage device 104, for example. When the server 300 is implemented by the computer illustrated in Fig. 4, the functions of the group management unit 310, the first prediction unit 320, the limit value setting unit 330, the control information generation unit 340, the second prediction unit 350, the actual result information acquisition unit 360, the limit value adjustment unit 370, and the transmission control unit 380 described with reference to Fig. 2 are implemented by, for example, the CPU 101 executing a program. The example configuration illustrated in Fig. 4 is merely an example in which the control device 100 is implemented by a computer.

### <Configuration of Equipment Device 200>

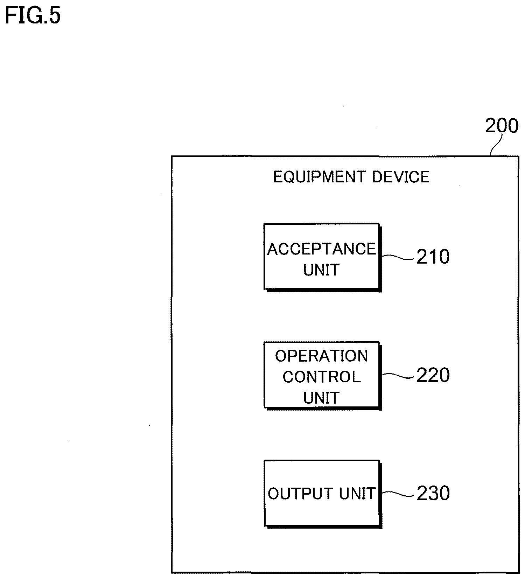

Fig. 5 is a diagram illustrating a configuration of the equipment device 200. The equipment device 200 includes an acceptance unit 210, an operation control unit 220, and an output unit 230. The equipment device 200 includes a mechanism or a device that operates to implement the functions of the equipment device 200 in accordance with the type. For example, when the equipment device 200 is an air conditioner, the equipment device 200 includes an indoor unit, an outdoor unit, and the like. When the equipment device 200 is a piece of lighting equipment, the equipment device 200 includes a lighting fixture, a control switch, and the like. Such mechanisms and the like have various types and modes that vary depending on the type of the equipment device 200, and the types and modes are not illustrated.

The acceptance unit 210 accepts a control instruction, which is output from the control device 100, via a network by using a network interface (not illustrated).

The operation control unit 220 controls the operation of a mechanism or a device disposed in the equipment device 200 in accordance with the control instruction accepted by the acceptance unit 210. Specifically, for example, when the equipment device 200 is an air conditioner, the acceptance unit 210 accepts information specifying a set temperature as a control instruction, and the operation control unit 220 controls the operation of the indoor unit and the outdoor unit so that the accepted set temperature is achieved. While an example of control related to temperature setting has been given, control based on a control instruction by the operation control unit 220 can be applied to various types of control (e.g., control of humidity or gas components) related to gas that can be controlled by the air conditioner. Also in any equipment device 200 other than the air conditioner, the operation control unit 220 executes control corresponding to the type of the equipment device 200 in accordance with the control instruction accepted from the control device 100.

The output unit 230 outputs information related to the operation state of the equipment device 200 to the control device 100 via a network by using the network interface (not illustrated).

The acceptance unit 210, the operation control unit 220, and the output unit 230 are implemented by a computer, for example. The computer that implements the operation control unit 220 may have the configuration described with reference to Fig. 4. In this case, the respective functions of the acceptance unit 210, the operation control unit 220, and the output unit 230 are implemented by, for example, the CPU 101 illustrated in Fig. 4 executing a program. The respective functions of the acceptance unit 210, the operation control unit 220, and the output unit 230 may be implemented by dedicated hardware. The functions may be implemented by, for example, an ASIC (Application Specific Integrated Circuit), an FPGA (Field-Programmable Gate Array), or any other circuit. A function implemented by the CPU 101 executing a program (software) and a function implemented by dedicated hardware may be combined to implement the acceptance unit 210, the operation control unit 220, and the output unit 230.

### <Example of Set Limit Values>

In the present embodiment, a group including a plurality of consumers is a contract target, and contract power is set based on average power used per group per time period. The average power used per group per time period will further be described with reference to the drawings.

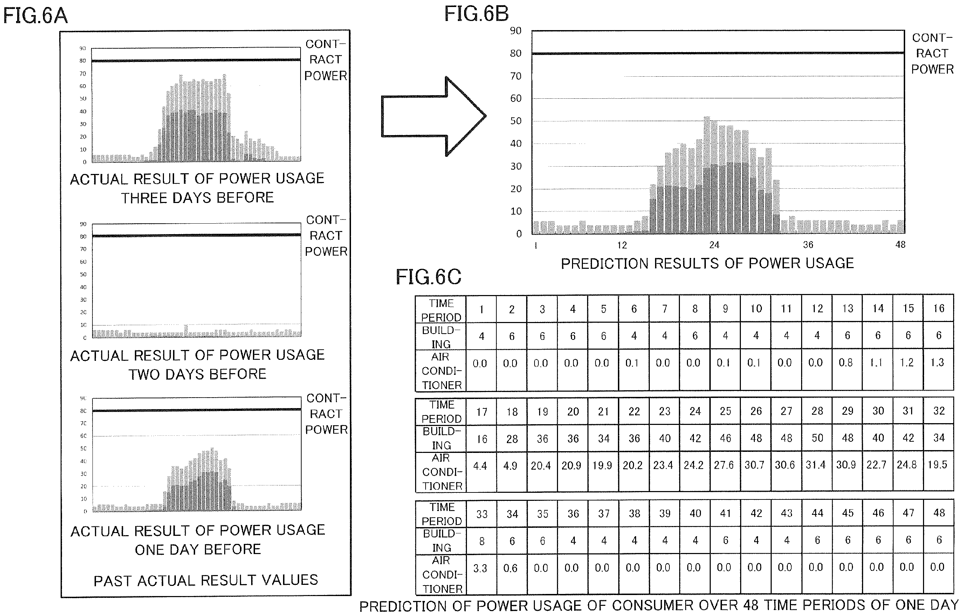

Fig. 6 includes diagrams illustrating an example of predicted power usage of one consumer. Fig. 6(A) is a diagram illustrating an example of actual results of power usage in the past, Fig. 6(B) is a diagram illustrating prediction results of power usage over a day, and Fig. 6(C) is a diagram illustrating an example of predicted values for respective time periods in the prediction results. In the graphs in Figs. 6(A) and 6(B), the horizontal axis represents time periods (48 time periods) of a day (24 hours), and the vertical axis represents average power (kW) used per time period. The graphs in Figs. 6(A) and 6(B) and the tables in Fig. 6(C) present the actual results and prediction results of average power used by the equipment devices 200 over the respective time periods of a day. Further, Figs. 6(A) to 6(C) illustrate, for the equipment devices 200 of one consumer, the actual results and the prediction results of the entire equipment devices 200 possessed by the consumer and the actual results and the prediction results of the air conditioner among the equipment devices 200.

Fig. 6(A) illustrates the actual results of the average power used per time period of three days before (three days before, two days before, and one day before) the day on which the power usage is to be predicted. In the drawings, a graph with a light color indicates the actual results of the entire equipment devices 200, and a graph with a dark color indicates the actual results of the air conditioner. Fig. 6(B) illustrates an example of prediction results of average power used per time period, which are predicted in consideration of the actual results illustrated in Fig. 6(A). Also in Fig. 6(B), as in Fig. 6(A), a graph with a light color indicates the prediction results of the entire equipment devices 200, and a graph with a dark color indicates the prediction results of the air conditioner. In Fig. 6(C), the predicted values of the average power used by the entire equipment devices 200 (in the drawing, illustrated as "building" representing a facility in which the equipment devices 200 are installed) over the respective time periods (the first time period to the 48th time period) of a day and the predicted values of the average power used by the air conditioner among the equipment devices 200 are illustrated in association with each other.

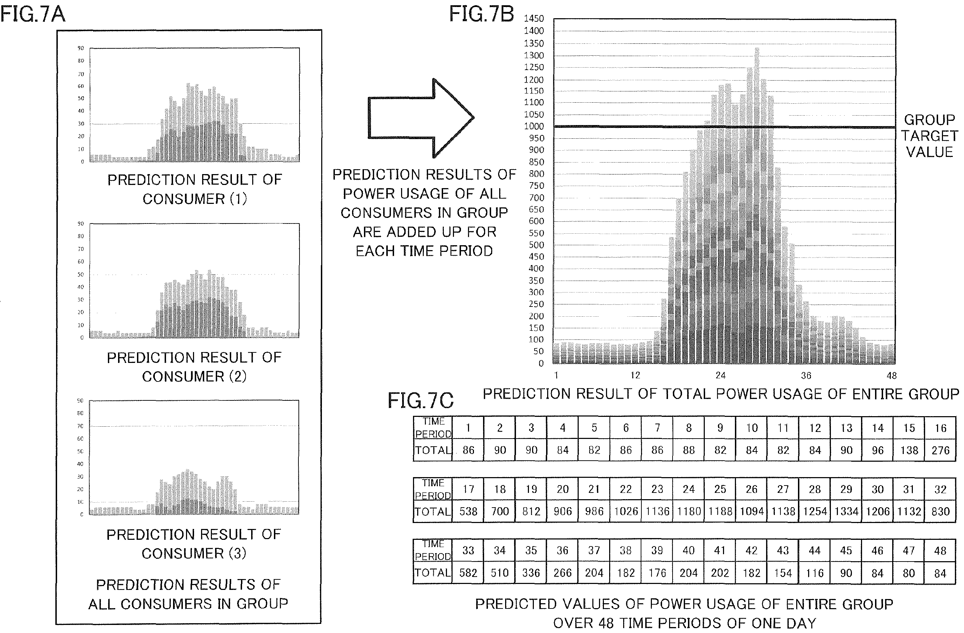

Fig. 7 includes diagrams illustrating an example of adding up predicted power usage of a group including a plurality of consumers. Fig. 7(A) is a diagram illustrating example predictions for the respective consumers included in the group, Fig. 7(B) is a diagram illustrating prediction results of the entire group, and Fig. 7(C) is a diagram illustrating an example of predicted values for respective time periods in the prediction results of the group. In the graphs in Figs. 7(A) and 7(B), the horizontal axis represents time periods (48 time periods) of a day (24 hours), and the vertical axis represents average power (kW) used per time period. The graphs in Figs. 7(A) and 7(B) and the tables in Fig. 7(C) present the prediction results of average power used by the consumers and the group over the respective time periods of a day. The prediction results of average power used by the entire equipment devices 200 of each consumer are referred to as prediction results of average power used by the consumer or prediction results of the consumer.

Fig. 7(A) illustrates prediction results of average power used per consumer in the group per time period. In Fig. 7(A), only the prediction results of three consumers (consumers (1) to (3)) among the plurality of consumers included in the group are illustrated, and the prediction results of the others are omitted. In Fig. 7(A), a graph with a light color indicates the prediction results of the entire equipment devices 200, and a graph with a dark color indicates the prediction results of the air conditioner. Fig. 7(B) illustrates prediction results of average power used by the entire group including the three consumers illustrated in Fig. 7(A) over the respective time periods. In Fig. 7(B), segments (colors) of the graph for each time period indicate that the predicted values of the average power used by the consumers included in the group are added up for the corresponding time period. Fig. 7(C) illustrates total values of the prediction results of average power used per consumer over the respective time periods (the first time period to the 48th time period) of a day.

It is assumed that the group has a target power (denoted by "target value" in the drawing) of 1000 kW. Referring to Figs. 7(B) and 7(C), the predicted values of the average power used by the entire group over the 22nd time period to the 31st time period exceed the target power. Accordingly, the limit value for the power usage of each of the consumers included in the group is set such that, during at least these time periods, the predicted values of the average power used by the entire group do not exceed the target power. The limit value itself of each consumer may be set not only for a time period in which the predicted value of the entire group exceeds the target power but also for another time period in which the predicted value of the entire group does not exceed the target power.

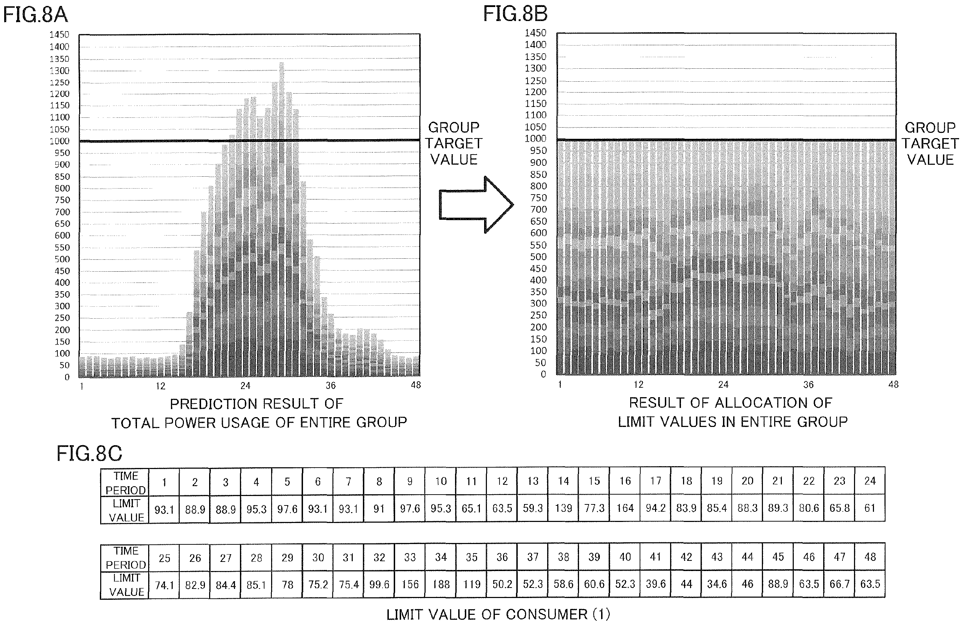

Fig. 8 includes diagrams illustrating an example of limit values set for respective consumers included in a group. Fig. 8(A) is a diagram illustrating an example of prediction of average power used by the group per time period, Fig. 8(B) is a diagram illustrating a result of allocation of limit values to the consumers included in the group, and Fig. 8(C) is a diagram illustrating an example of limit values allocated to one of the consumers included in the group for the respective time periods. In the graphs in Figs. 8(A) and 8(B), the horizontal axis represents time periods (48 time periods) of a day (24 hours), and the vertical axis represents average power (kW) used per time period.

Fig. 8(A) illustrates prediction results of average power used per consumer in the group per time period. The illustrated graph is the same as the graph illustrated in Fig. 7(B). Fig. 8(B) illustrates an example of the result of allocation of limit values set for the consumers included in the group when the average power used by the group for each time period is made equal to the target power. In Fig. 8(B), segments (colors) of the graph for each time period indicate the proportions of the limit values allocated to the respective consumers (power usage available to the consumers) for the corresponding time period. In principle, the proportions of the limit values allocated to the respective consumers for each time period are the proportions of the predicted values of the average power used by the respective consumers in the prediction of the average power used by the group illustrated in Fig. 8(A). Depending on the predicted value of each consumer, a lower limit, instead of the proportion of the predicted value of the average power used, may be assigned as the limit value. Fig. 8(C) illustrates the limit values for the respective time periods (the first time period to the 48th time period) of a day, which are allocated to one consumer (consumer (1)) among the consumers included in the group.

### <Correction of Limit Value>

The method for setting the limit value has been described in the description of the limit value setting unit 330 such that when the predicted value of the average power used by a certain consumer over a certain time period is relatively small, the limit value is set such that a value obtained by dividing the limit value by the predicted value is larger than that when the predicted value is relatively large. This setting method can be regarded as performing correction such that when the predicted value is relatively small with respect to the limit value set in accordance with the predicted value, a value obtained by dividing the limit value by the predicted value is larger than that when the predicted value is relatively large with respect to the limit value. For example, the setting method in each of the modes described with reference to Fig. 9 can be regarded as a correction method for performing correction such that a value obtained by dividing the limit value by the predicted value increases when the predicted value is relatively small with respect to the limit value (line a) set to the same value as the predicted value.

The correction of the limit value will further be described with reference to a specific example. Cases where the predicted value of the power usage is relatively small include a case where the predicted value of a certain consumer for a certain time period is smaller than an actual past value of power usage of the consumer and a case where the predicted value of a certain consumer is smaller than the predicted values of the other consumers in the group. A specific example is provided for each case.

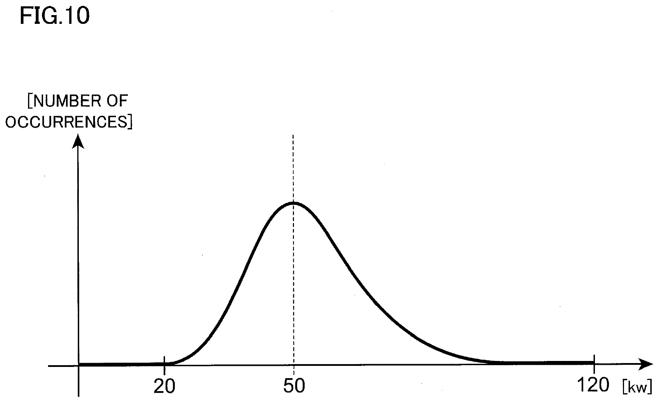

Fig. 10 is a diagram illustrating an example of a predicted value that is relatively smaller than an actual past value. Consideration is given to a case where actual past values of power usage (e.g., actual values of annual power usage) of a certain consumer are distributed in a range from 0 kW to 120 kW, centered on 50 kW, and where, as illustrated in Fig. 10, a predicted value of the consumer for a certain time period is 20 kW. In this case, it can be said that the predicted value is relatively small with respect to the distribution of the actual past values (e.g., compared with the mean or median). Accordingly, it is conceivable to correct the limit value to a value larger than 20 kW, which is the predicted value.

In the example illustrated in Fig. 10, for example, the reference point (reference t illustrated in Fig. 9) may be set to 30 kW. When the predicted value is larger than 30 kW (in other words, not relatively small), the limit value may not be corrected, and when the predicted value is equal to or smaller than 30 kW (relatively small), the limit value may be corrected. As an example, when the predicted value is equal to or smaller than 30 kW, for example, the limit value may be corrected in accordance with the magnitude of the predicted value as follows.

Predicted value of 25 kW ⇒ limit value of 32 kW (7 kW is added to the same value as the predicted value by correction)

Predicted value of 20 kW ⇒ limit value of 30 kW (10 kW is added to the same value as the predicted value by correction)

Predicted value of 10 kW ⇒ limit value of 15 kW (5 kW is added to the same value as the predicted value by correction) In this example, in the case of the limit value with respect to any of the predicted values, a value obtained by dividing the limit value by the predicted value is greater than 1 (limit value a predicted value > 1). The correction described above is merely an example of correction for the limit value. For example, correction may be performed such that the limit value is set based on the various approaches described with reference to Fig. 9.

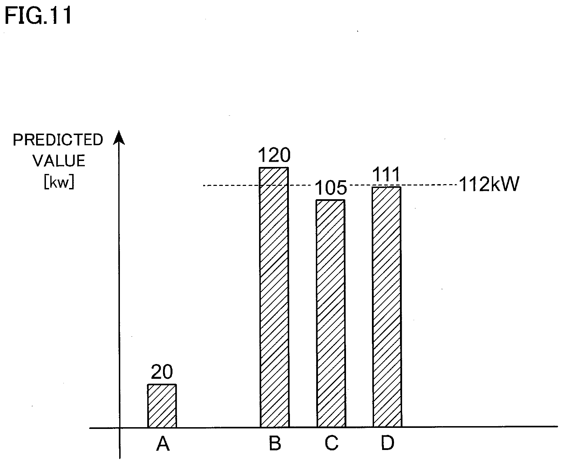

Fig. 11 is a diagram illustrating an example of a predicted value that is relatively smaller than predicted values of the other consumers in the group. It is assumed here that a group includes consumers A to D. In the example illustrated in Fig. 11, the predicted value of the average power used by the consumer A for a certain time period is 20 kW, the predicted value of the consumer B is 120 kW, the predicted value of the consumer C is 105 kW, and the predicted value of the consumer D is 111 kW. The average of the predicted values of the consumers (other consumers) other than the consumer A is 112 kW. In this case, it can be said that the predicted value of the consumer A is relatively small with respect to the predicted values of the other consumers. Accordingly, it is conceivable to correct the limit value to a value (e.g., 30 kW or the like) larger than 20 kW, which is the predicted value. The correction described above is merely an example of correction for the limit value. For example, correction may be performed such that the limit value is set based on the various approaches described with reference to Fig. 9.

While an embodiment has been described above, the technical scope of the present disclosure is not limited to the embodiment described above. For example, in the embodiment described above, a limit value is set before the start of the time period during which control based on control information is performed, and the limit value can be adjusted after the start of the time period. Alternatively, instead of a limit value being set before the start of the time period, a limit value may be set in accordance with the operating status of the equipment devices 200 within the time period. In the embodiment described above, the server 300 adjusts the limit value after the start of the time period. Alternatively, the control device 100 may adjust the limit value. In this case, when a plurality of control devices 100 control the equipment devices 200 of all of the consumers included in the group, the control devices 100 may exchange information on the operating status of the equipment devices 200 and adjust the limit values in accordance with the obtained information. Various modifications and substitutions of configurations that are made without departing from the scope of the technical idea of the present disclosure are included in the present disclosure.

Here, the embodiment described above may be implemented as follows. A power control system of the present disclosure is a power control system for performing power control such that a target value set for a group including a plurality of consumers is not exceeded, the system including a first prediction unit 320 that acquires a predicted value of power usage for each of the plurality of consumers; and a limit value setting unit 330 that sets a limit value correlated with available power set for each of the consumers for a specific time period, wherein the limit value setting unit 330 sets the limit value such that when a predicted value of each of the plurality of consumers for the specific time period is relatively small, a value obtained by dividing the limit value by the predicted value is larger than when the predicted value is relatively large.

This configuration provides appropriate allocation of power available to each individual consumer included in the group for use while performing control such that the power usage of the entire group does not exceed the contract power.

The limit value setting unit 330 may set the limit value to be equal to or greater than a predetermined lower limit, such that when the predicted value of each of the plurality of consumers for the specific time period is relatively small, a value obtained by dividing the limit value by the predicted value becomes large.

This configuration can secure a certain amount of power or more based on the lower limit as the power usage to be allocated to each consumer.

Further, when the predicted value of each of the plurality of consumers for the specific time period is relatively small, the limit value setting unit 330 may correct the limit value to a value larger than the predicted value, thereby increasing a value obtained by dividing the limit value by the predicted value.

With this configuration, allocation of an excessively small amount of power usage to each consumer can be avoided by correction.

Further, the limit value setting unit 330 may set the limit value for each of the plurality of consumers such that a value obtained by adding up the limit value for each of the plurality of consumers for the specific time period is equal to or less than the target value of the group of the plurality of consumers.

This configuration can prevent the power usage of the entire group from exceeding the target value even when control is performed such that the amount of power usage to be allocated to each consumer is not excessively small.

Further, the limit value setting unit 330 may set the limit value for each of the consumers, based on information on a predicted value of power usage of each of the consumers for the specific time period.

This configuration makes it possible to set the limit value based on the predicted value of the power usage of each of the consumers included in the group.

Further, the limit value setting unit 330 may set the limit value for each of the consumers, based on information on actual power usage of each of the consumers over a past specific period.

This configuration makes it possible to set the limit value based on an actual result of the power usage of each of the consumers included in the group in the past.

Further, the limit value setting unit 330 may set the limit value for each of the consumers, based on information on a maximum value of power usage of each of the consumers over each time period in a specific period.

This configuration makes it possible to set the limit value based on the contract power set for the group.

Further, when a predicted value of power usage of at least a consumer among the consumers for the specific time period is lower than a predetermined lower-limit threshold, the limit value setting unit 330 may set the lower limit as the limit value of the consumer.

This configuration ensures that a consumer to which less power is set to be allocated for a certain time period when a limit value is set by a specific method can use power over the time period.

Further, when a total value of the predicted value of the power usage of the plurality of consumers for the specific time period is smaller than the target value of the group including the plurality of consumers by a certain amount or more, the limit value setting unit 330 may set, for one or more consumers included in the group, the limit value of the power usage of the consumers for the specific time period to a value higher than the predicted value of the power usage of each of the consumers in a range in which power usage of the group does not exceed the threshold.

This configuration allows the consumers to use power more than even when the limit value is set, the consumer can use power more than predicted power usage, according to the conditions, even when limit values are set.

A program of the present disclosure is a program for causing a computer that controls a system for performing power control such that a target value set for a group including a plurality of consumers is not exceeded, to function as a first prediction unit 320 that acquires a predicted value of power usage for each of the plurality of consumers; and a limit value setting unit 330 that sets a limit value correlated with available power set for each of the consumers for a specific time period, wherein in a function of the limit value setting unit 330, the computer is caused to set the limit value such that when a predicted value of each of the plurality of consumers for the specific time period is relatively small, a value obtained by dividing the limit value by the predicted value is larger than when the predicted value is relatively large.

A computer having installed therein the program provides appropriate allocation of power available to each individual consumer included in the group for use while performing control such that the power usage of the entire group does not exceed the contract power.

### Reference Signs List

100 control device, 110 control information acquisition unit, 120 operation information acquisition unit, 130 storage unit, 140 control instruction generation unit, 150 control instruction output unit, 160 operation information output unit, 200 equipment device, 210 acceptance unit, 220 operation control unit, 230 output unit, 300 server, 310 group management unit, 320 first prediction unit, 330 limit value setting unit, 340 control information generation unit, 350 second prediction unit, 360 actual result information acquisition unit, 370 limit value adjustment unit, 380 transmission control unit

## Claims

1. A power control system for performing power control such that a target value set for a group including a plurality of consumers is not exceeded, the system comprising:
an acquisition unit that acquires a predicted value of power usage for each of the plurality of consumers; and
a setting unit that sets a limit value correlated with available power set for each of the consumers for a specific time period, wherein
the setting unit sets the limit value such that when a predicted value of each of the plurality of consumers for the specific time period is relatively small, a value obtained by dividing the limit value by the predicted value is larger than when the predicted value is relatively large.

2. The power control system according to claim 1, wherein the setting unit sets the limit value to be equal to or greater than a predetermined lower limit, such that when the predicted value of each of the plurality of consumers for the specific time period is relatively small, a value obtained by dividing the limit value by the predicted value becomes large.

3. The power control system according to claim 1, wherein when the predicted value of each of the plurality of consumers for the specific time period is relatively small, the setting unit corrects the limit value to a value larger than the predicted value, thereby increasing a value obtained by dividing the limit value by the predicted value.

4. The power control system according to any one of claims 1 to 3, wherein the setting unit sets the limit value for each of the plurality of consumers such that a value obtained by adding up the limit value for each of the plurality of consumers for the specific time period is equal to or less than the target value of the group of the plurality of consumers.

5. The power control system according to claim 1, wherein the setting unit sets the limit value for each of the consumers, based on information on a predicted value of power usage of each of the consumers for the specific time period.

6. The power control system according to claim 1, wherein the setting unit sets the limit value for each of the consumers, based on information on actual power usage of each of the consumers over a past specific period.

7. The power control system according to claim 1, wherein the setting unit sets the limit value for each of the consumers, based on information on a maximum value of power usage of each of the consumers over each time period in a specific period.

8. The power control system according to claim 2, wherein when a predicted value of power usage of at least a consumer among the consumers for the specific time period is lower than a predetermined lower-limit threshold, the setting unit sets the lower limit as the limit value of the consumer.

9. The power control system according to any one of claims 1 to 7, wherein when a total value of the predicted value of the power usage of the plurality of consumers for the specific time period is smaller than the target value of the group including the plurality of consumers by a certain amount or more, the setting unit sets, for one or more consumers included in the group, the limit value of the power usage of the consumers for the specific time period to a value higher than the predicted value of the power usage of each of the consumers in a range in which power usage of the group does not exceed the target value.

10. A program for causing a computer that controls a system for performing power control such that a target value set for a group including a plurality of consumers is not exceeded, to function as:
an acquisition unit that acquires a predicted value of power usage for each of the plurality of consumers; and
a setting unit that sets a limit value correlated with available power set for each of the consumers for a specific time period, wherein
in a function of the setting unit, the computer is caused to set the limit value such that when a predicted value of each of the plurality of consumers for the specific time period is relatively small, a value obtained by dividing the limit value by the predicted value is larger than when the predicted value is relatively large.
